# FASCICULE DE BREVET EUROPEEN

(11) **EP 2 310 647 B1**
(45) Date de publication et mention de la délivrance du brevet: **21.12.2011**
(21) Numéro de dépôt: 09772711.9
(22) Date de dépôt: 09.06.2009
(51) Int. Cl.: F01N 11/00, G07C 5/08

(54) **PROCEDE DE DIAGNOSTIC DES DEFAILLANCES D'UN FILTRE D'UNE LIGNE D'ECHAPPEMENT DES GAZ D'UN MOTEUR A COMBUSTION INTERNE**
VERFAHREN ZUR DIAGNOSE EINES VERSAGENS EINES ABGASLEITUNGSFILTERS EINES VERBRENNUNGSMOTORS
METHOD FOR DIAGNOSING FAILURES OF AN INTERNAL COMBUSTION ENGINE EXHAUST LINE FILTER

(30) Priorité: 09.06.2008 FR 0853810
(43) Date de publication de la demande: 20.04.2011
(73) Titulaire: Renault s.a.s., 92100 Boulogne-Billancourt (FR)
(72) Inventeur: PILLOT, Adrien, F-91290 Arpajon (FR); VINDRET, Denis, F-75003 Paris (FR)
(86) Numéro de dépôt international: PCT/FR2009/051084
(87) Numéro de publication internationale: WO 2010/001029

(56) Documents cités:
- DE-A1-102005 041 537
- DE-A1-102006 055 542

## Description

### Domaine de l'invention

Le domaine de l'invention est celui des véhicules automobiles et, en particulier, la dépollution des gaz d'échappement générés par ces derniers, notamment par les moteurs diésels. L'invention concerne, en particulier, le filtre qui est souvent utilisé dans la ligne d'échappement de ce type de gaz.

### Art antérieur et problème posé

En matière de dépollution, afin de répondre à la baisse des seuils admis pour les émissions de gaz polluants des véhicules automobiles, des systèmes de post-traitement des gaz d'échappement, de plus en plus complexes, sont utilisés dans la ligne d'échappement des moteurs fonctionnant avec des mélanges pauvres. Ceux-ci permettent de réduire notamment les émissions de particules et d'oxydes d'azote en plus du monoxyde de carbone et des hydrocarbures imbrûlés par ces moteurs à combustion interne. Contrairement à un catalyseur d'oxydation traditionnel, ces systèmes fonctionnent de manière discontinue ou alternative, c'est-à-dire qu'ils piègent des polluants en fonctionnement normal, mais ne les traitent que lors de phases de régénération. Ainsi, pour être régénérés, ces pièges nécessitent de modes de combustion spécifique, afin de garantir les niveaux de condition thermique et/ou de richesse nécessaire.

En outre, l'installation d'un filtre à particules dans la ligne d'échappement d'un moteur à combustion interne présente un obstacle à l'écoulement des gaz et provoque une contrepression à l'échappement, ce qui perturbe le fonctionnement du moteur et dégrade ses performances. Il faut donc nettoyer régulièrement le filtre à particules.

A cet effet, on met en oeuvre des phases de régénération du filtre à particules, utilisées pour éliminer les suies émises par le moteur. Ces régénérations nécessitent une élévation de température des gaz d'échappement, afin de déclencher des réactions de combustion des particules piégées. Cette phase de régénération s'effectue généralement au moyen d'une injection d'éléments réducteurs dans la ligne d'échappement, soit grâce à une injection retardée dans les cylindres, appelée "post injection", soit grâce à une injection directement effectuée dans la ligne d'échappement par un injecteur supplémentaire. Les éléments réducteurs réagissent alors dans un catalyseur placé en amont du filtre à particules, avec l'oxygène présent dans les gaz d'échappement selon des réactions hexothermiques.

Or, ce cycle, alternant des stockages et des régénérations, peut être perturbé par de nombreuses clauses :
- une accumulation élevée de résidus non combustibles dans le filtre à particules : dans ce cas, la contrepression à l'échappement moyenne augmente de manière irréversible ;
- un type de roulage du conducteur non adapté à la phase de régénération. En effet, dans l'état actuel, il existe une vitesse moyenne minimale et une durée minimale de roulage pour permettre la phase de régénération ;
- si, sur des longues distances, le conducteur roule très lentement, par exemple lors d'un roulage de type "bouchon", à moins de 10 km/h, ou si ces trajets sont très courts, par exemple une durée inférieure à 5 min, la contrepression d'échappement moyenne va augmenter sans possibilité de diminution. Dans certains cas, un affichage au tableau de bord d'un voyant et/ou d'un message peut permettre d'indiquer au conducteur un certain type de roulage à adopter, afin d'effectuer une régénération complète du filtre dans les conditions requises, mais le conducteur n'aura pas toujours la possibilité ou la volonté de suivre ces instructions ;
- une défaillance du système qui empêche la régénération, ce qui mène à une augmentation continue de la contrepression d'échappement.

Dans tous ces cas, l'augmentation de la contrepression à l'échappement aura des effets sur le comportement du véhicule qui inciteront le conducteur à porter son véhicule en atelier de réparation. Il est donc important de pouvoir diagnostiquer la défaillance, venant éventuellement du système comprenant le filtre à particules, afin de permettre la réparation du véhicule.

Actuellement, les méthodes pour diagnostiquer l'état du filtre à particules sont basées sur l'analyse d'une mesure en temps réel, en garage, d'un ou de plusieurs paramètres relatifs au moteur et ayant une influence sur la capacité de chargement du filtre à particules. On pense, en particulier, à la pression différentielle aux bornes du filtre, la mesure de richesse, la température d'échappement. Ainsi, il est possible de déterminer si le filtre à particules est endommagé ou non. Les stratégies de gestion du filtre à particules pendant le roulage sont utilisées, sans qu'une consultation extérieure de ce qui s'est passé pendant que le véhicule roulait, puissent être effectuées, par exemple lors d'un retour au garage. Le profil de roulage du conducteur ayant une très grande influence sur le comportement du filtre à particules, les changements de filtres, ou, plus généralement, les retours du véhicule au garage peuvent être ainsi répétés de manière abusive. De plus, le contrôle d'un nombre restreint de paramètres ne permet pas de conserver une vision globale des problèmes éventuels relatifs aux filtres à particules.

Enfin, lorsque le véhicule arrive en atelier ou en garage, il est beaucoup trop long de démonter, pour examen, tous les éléments ayant un impact potentiel sur le fonctionnement du filtre à particules.

Le document DE-A-10.2005.041.537 fait mention d'un dispositif de diagnostic embarqué (on-board-diagnose = OBD) qui permet de surveiller le fonctionnement du filtre à particules. Cependant, ce document n'indique pas par quel procédé le dispositif aboutit à un diagnostic de défaillance du filtre à particules.

### Résumé de l'invention

A cet effet, un objet principal de l'invention est un procédé de diagnostic des défaillances des filtres à particules d'une ligne d'échappement des gaz d'échappement d'un moteur à combustion interne consistant à, entre autres, enregistrer des paramètres relatifs au fonctionnement du filtre à particules et du moteur dans une mémoire permanente dans le boîtier de commande du véhicule, pendant l'utilisation du filtre à particules, de manière à ce que ces paramètres puissent être exploités directement par un opérateur à un moment choisi, notamment pendant un examen en atelier ou au garage.

Selon l'invention, on se propose d'utiliser un processus de détection de panne constitué des étapes successives suivantes :
- étape 1 : détection de défauts dans le calculateur de bord, afin de localiser la panne ;
- étape 2 : constatation des régénérations du filtre à particules ayant réussi pendant le roulage du véhicule ;
- étape 3 : comparaison de l'intervalle kilométrique moyen par rapport à la distance minimum entre deux régénérations, augmenté d'un nombre N déterminé de kilomètres et caractéristique du moteur du véhicule ;
- étape 4 : contrôle visuel des piquages du capteur de pression différentielle ; et
- étape 5 : vérification des types de roulage des dix dernières régénérations.

Il est également avantageux de procéder à une série de tests concernant, entre autres, des paramètres de fonctionnement du véhicule.

Un autre objet de l'invention est un programme informatique, comprenant un support pouvant être lu par ordinateur portant des moyens formant code de programme informatique aptes, lorsque ledit programme est chargé sur un ordinateur, à faire que l'ordinateur exécute la procédure ci-dessus mentionnée.

Description détaillée d'un exemple de réalisation de l'invention

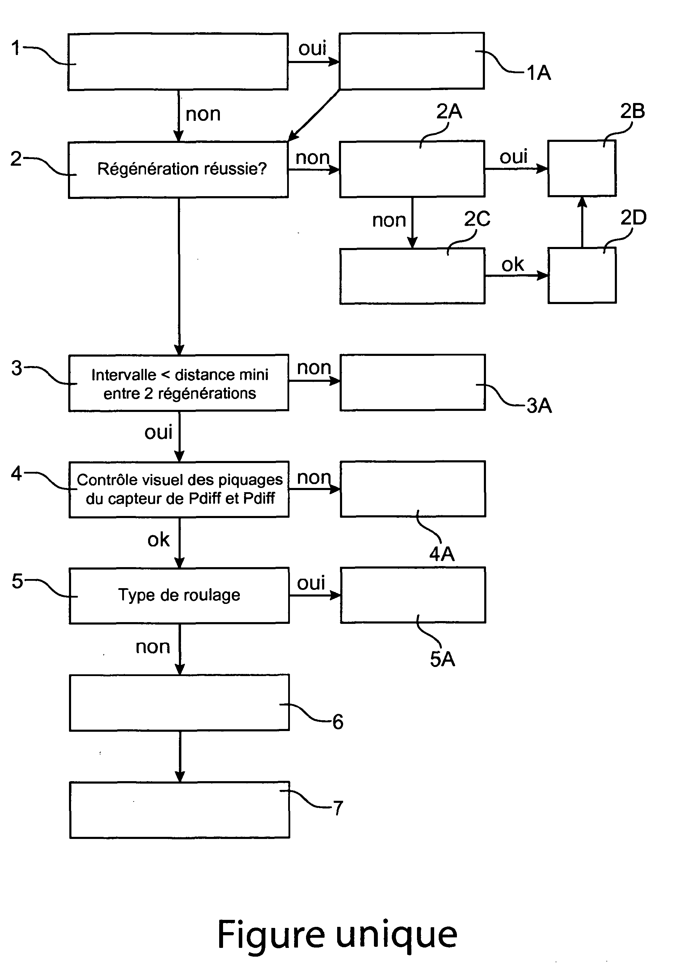

La figure unique décrit un ordinogramme représentant le procédé de diagnostic des défaillances d'un filtre à particules selon l'invention.

Une caractéristique principale et essentielle de l'invention est de collecter un maximum d'informations concernant la vie du filtre à particules pendant une période déterminée, afin de pouvoir suivre l'évolution de l'ensemble des paramètres de celui-ci, afin d'obtenir un diagnostic le plus fiable possible. Dans ce but, les différentes opérations de régénération effectuées pendant le fonctionnement du filtre sont comptabilisées. Il en est de même pour l'évaluation des intervalles kilométriques séparant ces différentes régénérations. Les différents types de roulage du véhicule sont également enregistrés, en particulier pour le dix dernières régénérations. A ce sujet, on défini certains types de roulages dont certains qualifiés de "urbains".

D'autres paramètres concernant également le véhicule et/ou le filtre sont utilisés dans une autre série de tests. Il s'agit, entre autres, de la mesure de la température à l'entrée du filtre à particules et une mesure de débit peut également être faite. Dans le cadre du fonctionnement du filtre à particules, installé dans le véhicule, il est également prévu de relever les éventuelles recirculations des gaz d'échappement, les pressions différentielles et leurs défauts. Un contrôle visuel des piquages relatifs aux dispositifs de mesures de pression différentiels peut être fait. Il en est de même du contrôle de la ligne d'échappement du moteur et du circuit d'admission. Enfin, certains paramètres d'admission à l'entrée du moteur, tel que la turbocompression, la compression dans les cylindres et des paramètres relatifs à l'injection peuvent être relevés.

Une fois les paramètres relatifs aux filtres enregistrés lors des différents roulages du véhicule, l'utilisateur de ce dernier a tout le loisir de surveiller son fonctionnement. Il peut estimer éventuellement qu'un non fonctionnement ou qu'une anomalie apparaît dans le fonctionnement de son véhicule et décidé de faire examiner celui-ci en garage. L'allumage trop fréquent de certains voyants lumineux du tableau de bord, relatif au fonctionnement du véhicule, peuvent notamment inciter l'utilisateur à effectuer cette démarche.

Dans ce cas et en référence à la figure unique, le cadre 1 illustre cette prise de décision. Cette étape 1 consiste à détecter les éventuels défauts enregistrés dans le ou les calculateurs de bord du véhicule pour orienter l'opérateur, soit vers d'autres appareils utilisant des éventuels procédés de diagnostics de défaillances d'autres organes que le filtre à particules (étape subsidiaire 1A), soit vers la suite de cet ordinogramme.

Dans le cas où la localisation de la défaillance est effectivement reportée sur le système d'échappement, et plus précisément le filtre, la deuxième étape 2 consiste à s'interroger sur le nombre de régénérations du filtre ayant été effectuées et réussies pendant le roulage du véhicule.

Dans le cas de la réponse négative, une étape subsidiaire 2A consiste à s'interroger sur le fait de savoir si le moteur aurait été coupé trop souvent. Dans le cas d'une réponse positive à cette dernière question, une explication devra être donnée au client (étape 2B). Dans le cas d'une réponse négative à cette question subsidiaire, il faudra procéder à une régénération du filtre à particules (étape 2C) et définir quel type de roulage inadapté été effectué pour expliquer au client le type de roulage à mettre en oeuvre à l'avenir (étape 2D).

Dans le cas d'une réponse positive à la deuxième question 2, la troisième étape consiste à comparer l'intervalle kilométrique moyen entre deux régénérations du filtre par rapport à la distance minimale parcourue entre deux régénérations augmentée d'un nombre déterminé N de kilomètres caractéristique du type du moteur. Si cet intervalle n'est pas plus petit que la distance minimale parcourue entre deux régénérations augmentée du nombre N déterminé, le véhicule doit être rendu au client (étape 3A).

Dans le cas où l'intervalle, suite à deux régénérations réussies, serait inférieur à la distance minimale parcourue entre deux régénérations et augmenté du nombre déterminé N, la quatrième étape consiste à contrôler, de façon visuelle, les piquages des capteurs de pression différentielle installés dans la ligne d'échappement. Si ces contrôles font apparaître des anomalies, il conviendra alors de réparer l'anomalie et de rendre le véhicule au client (étape 4A).

Si ce contrôle ne fait pas apparaître d'anomalies au niveau de ces piquages, il y aura lieu de vérifier tous les types de roulages ayant été effectués depuis les dix dernières régénérations du filtre à particules (étape 5). Dans le cas où la majeure partie de ces roulages sont du type urbain, cette information devra être portée à la connaissance du client (étape 5A).

Dans le cas où ces différents roulages s'avéreraient adaptés au véhicule et au filtre à particules, la dernière étape, selon l'invention, consiste à effectuée une série de tests concernant, entre autres, des paramètres de fonctionnement du véhicule (étape 6). Parmi ces différents tests, on cite la vérification de défauts enregistrés au niveau de différents calculateurs du véhicule, le contrôle de la conformité de la pression atmosphérique, le contrôle de toute la ligne d'échappement du moteur, le contrôle du circuit d'admission d'air, le contrôle du débitmètre, le contrôle de la turbocommande, le contrôle de la compression dans les cylindres et le contrôle des injecteurs. Dans le cas où ces différents contrôles n'apporteraient pas d'éléments supplémentaires au diagnostic de la défaillance, il devra être fait appel au service spécialisé du fabricant du véhicule, ou des concessionnaires de garages affiliés au type de véhicule concerné (étape 7).

L'analyse du type de roulage comprend lui-même plusieurs paramètres entrant en ligne de compte, parmi lesquels : la vitesse du véhicule, le régime du moteur et la température des gaz d'échappement. On note que les évènements, qui peuvent déclencher l'enregistrement des paramètres susnommés, sont des intervalles périodiques, tels que des distances kilométriques permettant d'observer le comportement de l'utilisateur et d'enregistrer les paramètres clefs à intervalles maîtrisés et des changements d'état du système de dépollution en question qui est géré de manière automatique et passe par différents états de gestion.

Ainsi, il est facile de comprendre que, lors d'un retour du véhicule au garage, le diagnostic de la panne peut s'effectuer par un simple traitement des données au moyen du processus susmentionné, qui est, en fait, un logigramme explicitant au réparateur la démarche à suivre pour trouver l'origine de la panne.

Pour concrétiser un tel processus, il est nécessaire de disposer d'un programme informatique comprenant un support pouvant être lu par un ordinateur usuel, mais portant des moyens formant code de programme informatique. Lorsque ce programme informatique est chargé sur l'ordinateur, ces moyens permettent de faire en sorte que l'ordinateur exécute la procédure du processus susmentionné, le support pouvant être un CD (Compact Disc) qui remettra à jour l'outil diagnostique (ordinateur).

## Revendications

1. Procédé de diagnostic de défaillance d'un filtre d'une ligne d'échappement des gaz d'échappement d'un moteur à combustion interne, le procédé consistant à, entre autres, enregistrer des paramètres relatifs au fonctionnement du filtre à particules et du moteur dans une mémoire permanente dans le boîtier de commande du véhicule pendant l'utilisation du filtre, de manière à pouvoir être exploités directement par un opérateur à un moment choisi, en cas de défaillance constatée, **caractérisé en ce qu'**il consiste à utiliser un processus de détection de panne constitué par les étapes suivantes successives :
- étape 1 : détection des défauts dans les calculateurs de bord du véhicule, dans le but de localiser la défaillance ;
- étape 2 : constatation des régénérations du filtre à particules ayant réussies pendant les roulages du véhicule ;
- étape 3 : comparaison de l'intervalle kilométrique moyen par rapport à la distance minimum entre deux régénérations, augmentée d'un nombre N déterminé de kilomètres et caractéristique du moteur du véhicule ;
- étape 4 : contrôle visuel de piquage du capteur de pression différentielle ; et
- étape 5 : vérification des types de roulage des dix dernières régénérations.

2. Procédé de diagnostic selon la revendication 1, **caractérisé en ce que** ce processus se complète d'une étape de tests concernant, entre autres, des paramètres de fonctionnement du véhicule.

3. Produit de programme informatique comprenant un support pouvant être mis par un ordinateur portant des moyens formant code de programme informatique aptes à, lorsque ledit programme est chargé sur un ordinateur, faire que l'ordinateur exécute la procédure selon la revendication 1 ou 2.

## Claims

1. Method for diagnosing failure of a filter of a line for exhausting exhaust gases of an internal combustion engine, the method consisting, amongst other things, in recording parameters relating to the operation of the particle filter and of the engine in a permanent memory in the control module of the vehicle during the use of the filter, so as to be able to be used directly by an operator at a chosen moment, in the event that failure is found, **characterized in that** it consists in using a fault detection process consisting of the following successive steps:
- step 1: detecting defects in the computers on board the vehicle, for the purpose of locating the failure;
- step 2: ascertaining the regenerations of the particle filter that have been successful during the runs of the vehicle;
- step 3: comparing the average mileage interval relative to the minimum distance between two regenerations, increased by a determined number N of kilometres and characteristic of the engine of the vehicle;
- step 4: carrying out a visual inspection of branch connection of the differential pressure sensor; and
- step 5: verifying the types of running of the last ten regenerations.

2. Diagnostic method according to Claim 1, **characterized in that** this process is supplemented by a test step relating, amongst other things, to operating parameters of the vehicle.

3. Computer program product comprising a medium that can be read by a computer supporting means forming a computer program code capable, when the said program is loaded onto a computer, of ensuring that the computer executes the procedure according to Claim 1 or 2.

## Patentansprüche

1. Verfahren zur Diagnose des Versagens eines Filters einer Auspuffanlage der Abgase eines Verbrennungsmotors, wobei das Verfahren unter anderem darin besteht, während der Verwendung des Filters Parameter bezüglich des Betriebs des Partikelfilters und des Motors in einem Permanentspeicher im Steuergerät des Fahrzeugs zu speichern, damit sie im Fall eines festgestellten Versagens zu einem gewählten Zeitpunkt direkt von einem Bediener ausgewertet werden können, **dadurch gekennzeichnet, dass** es darin besteht, einen Pannenerfassungsprozess zu verwenden, der aus den folgenden aufeinanderfolgenden Schritten besteht:
- Schritt 1: Erfassung der Fehler in den Bordcomputern des Fahrzeugs, mit dem Ziel, das Versagen zu lokalisieren;
- Schritt 2: Feststellen der Regenerierungen des Partikelfilters, die während der Fahrten des Fahrzeugs erfolgreich waren;
- Schritt 3: Vergleich des mittleren Kilometerintervalls bezüglich des Mindestabstands zwischen zwei Regenerierungen, erhöht um eine bestimmte Anzahl N von Kilometern und Merkmalen des Motors des Fahrzeugs;
- Schritt 4: Sichtkontrolle des Anschlusses des Differenzdrucksensors; und
- Schritt 5: Überprüfung der Fahrttypen der zehn letzten Regenerierungen.

2. Diagnoseverfahren nach Anspruch 1, **dadurch gekennzeichnet, dass** dieser Prozess durch einen Testschritt vervollständigt wird, der unter anderem Betriebsparameter des Fahrzeugs betrifft.

3. Computerprogrammprodukt, das einen computerlesbaren Träger enthält, der einen Computerprogrammcode formende Einrichtungen trägt, die, wenn das Programm in einen Computer geladen ist, bewirken können, dass der Computer das Verfahren nach Anspruch 1 oder 2 ausführt.
